Europäisches Patentamt

European Patent Office

Office européen des brevets

(19)

(11) **EP 0 685 923 B1**

(12) **EUROPÄISCHE PATENTSCHRIFT**

(45) Veröffentlichungstag und Bekanntmachung des Hinweises auf die Patenterteilung:
**25.08.1999 Patentblatt 1999/34**

(51) Int Cl.$^6$: **H02M 7/5395**

(21) Anmeldenummer: **94108512.8**

(22) Anmeldetag: **03.06.1994**

(54) **Geräuscharmer Betrieb einer von einem Pulswechselrichter gespeisten Maschine**

Low noise operation of a pulsed inverter fed motor

Opération peu bruyante d'un moteur alimenté par un onduleur à impulsions

(84) Benannte Vertragsstaaten:
**AT CH DE ES FR GB LI**

(43) Veröffentlichungstag der Anmeldung:
**06.12.1995 Patentblatt 1995/49**

(73) Patentinhaber: **INVENTIO AG**
**CH-6052 Hergiswil NW (CH)**

(72) Erfinder:
• **Stemmler, Herbert, Prof.Dr.Ing.**
**CH-5416 Kirchdorf (CH)**
• **Eilinger, Thomas, Dipl.El.-Ing.ETH**
**CH-8400 Winterthur (CH)**

(56) Entgegenhaltungen:
**DE-A- 3 912 706**

• **PATENT ABSTRACTS OF JAPAN vol. 12, no. 412 (E-676) 31. Oktober 1988 & JP-A-63 148 894 (MITSUBISHI) 21. Juni 1988**
• **INTERNATIONAL CONFERENCE ON INDUSTRIAL ELECTRONICS, CONTROL AND INSTRUMENTATION IECON '93, 15. November 1993, MAUI, HAWAII Seiten 1187 - 1192, XP428221 BLAABJERG 'Improved modulation techniques for PWM-VSI drives'**

## Beschreibung

Die Erfindung betrifft ein Verfahren zum geräuscharmen Betrieb einer Maschine, die von einem Pulswechselrichter gespeist wird, bei dem die Schaltimpulse zur Steuerung der Schaltelemente des Wechselrichters, mittels derer das Pulsmuster der Wechselrichter-Ausgangsspannung erzeugt wird, durch Trägermodulation generiert werden, wobei die Frequenz eines Trägersignals der Trägermodulation zur Pulsmustererzeugung mittels Pulsfrequenzmodulation in Abhängigkeit von einer definierten Funktion zur Verringerung oder Eliminierung von störend hörbaren Oberschwingungen der Wechselrichter-Ausgangsspannung moduliert wird.

Die meisten von einem Pulswechselrichter gespeisten Maschinen arbeiten mit Schaltfrequenzen, die im empfindlichsten Bereich des menschlichen Gehörs liegen (2 kHz bis 10 kHz). Ein häufig verwendetes Steuerprinzip ist das Unterschwingungsverfahren mit konstanter Trägerfrequenz. Das von diesem Verfahren erzeugte Frequenzspektrum weist allerdings einzelne Oberschwingungen mit hohen Amplituden auf, welche ein unangenehmes Geräusch erzeugen. Das üblicherweise verwendete, dreieckförmige Trägersignal zur Bestimmung der Schaltzeitpunkte des Umrichters weist bei diesen Verfahren eine konstante Frequenz auf.

Mit der DE-OS 3912706 ist ein Verfahren zum geräuscharmen Betrieb einer von einem Pulswechselrichter gespeisten Maschine bekanntgeworden, dessen Pulsbreitenmodulator (PWM) nach dem Unterschwingungsverfahren arbeitet. Die Frequenz des Trägersignals zur Erzeugung der pulsbreitenmodulierten Steuerimpulse für den Wechselrichter wird dabei nicht als ein bestimmter, im stationären Zustand konstanter Wert vorgegeben, sondern wird innerhalb eines vorgegebenen Frequenzbandes ständig und unabhängig vom Betriebszustand der Maschine variiert. Das Frequenzspektrum der Wechselrichter-Ausgangsspannungen besteht dann nicht aus einzelnen Spektrallinien, sondern ist über das gesamte Frequenzband verteilt.

Beim vorstehend beschriebenen Verfahren, welches mit Pulsbreitenmodulation (PWM) arbeitet, wird zusätzlich die Pulsfrequenz variiert. Ein Generator liefert ein statistisch ermitteltes Steuersignal (z.B. von einer Gauss-Verteilung) für die Trägersignalfrequenz. Für diese Frequenz ist der Mittelwert und die Bandbreite vorgegeben. Der Generator ist ein Zufallsgenerator oder ein digitaler Generator zur Erzeugung von Pseudozufallszahlen. In diesem Fall besteht nur die Möglichkeit, das Frequenzspektrum in einem bestimmten Bereich zufällig zu beeinflussen. Wegen des Random-Modulationsprinzips ist eine exakte Bestimmung des Frequenzspektrums nicht möglich. Zudem können Oberschwingungen, welche mechanische Resonanzen im Stator anregen, nur bedingt eliminiert oder dauernd so reduziert werden, dass sie keine störende Wirkung mehr ausüben.

Aus dem Dokument JP-A-63148894 ist ein Inverter bekannt geworden, bei dem zur Verminderung von elektromagnetischen Störgeräuschen ein Generator zur Erzeugung eines frequenzmodulierten Trägersignales eingesetzt wird. Ein als Trägersignal dienendes Dreiecksignal wird beispielsweise mit einem sinusförmigen Signal moduliert und zur Steuerung der Inverterausgangsspannung mit einem modulierten Signal verglichen.

Nachteilig bei dieser Einrichtung ist, dass keine präzise Eliminierung von Oberwellen möglich ist.

Der Erfindung liegt die Aufgabe zugrunde, ein Verfahren zum geräuscharmen Betrieb einer von einem Pulswechselrichter gespeisten Maschine der eingangs genannten Art vorzuschlagen, welches dessen Nachteile nicht aufweist und sowohl zu einer für das menschliche Ohr angenehmeren Geräuschcharakteristik wie auch zu einer Verminderung der wahrgenommenen Lautstärke führt.

Diese Aufgabe wird durch die im Patentanspruch 1 gekennzeichnete Erfindung gelöst.

Die durch die Erfindung erreichten Vorteile sind im wesentlichen darin zu sehen, dass ein gezieltes Eingreifen in das Pulsmuster mit vorhersehbarem Ergebnis möglich wird. Durch die Modulation des Trägersignals mit einer definierten Funktion sind die Amplituden und Frequenzen der Oberschwingungen der Wechselrichter-Ausgangsspannungen exakt berechenbar. Dies bedeutet, dass das Spektrum der Wechselrichter-Ausgangsspannungen zu jedem Zeitpunkt bekannt ist. Durch gezieltes Setzen von Parametern können die Oberschwingungsfrequenzen gleichmässig verteilt werden. Dadurch verkleinern sich die Oberschwingungsamplituden Folglich ergibt sich durch die kleineren Oberschwingungsamplituden und ein gleichmässiges Verteilen der Oberschwingungen über das Frequenzspektrum ein Geräusch, welches als weniger störend wahrgenommen wird und dessen Pegel kleiner ist als bei herkömmlichen Verfahren.

Durch die in den Unteransprüchen aufgeführten Massnahmen sind vorteilhafte Weiterbildungen und Verbesserungen des im Anspruch 1 angegebenen Verfahrens möglich. Mit Hilfe von Bessel-Funktionen können Frequenzbänder eliminiert werden, welche mechanische Statorresonanzen anregen würden.

In der Zeichnung sind zwei Ausführungsbeispiele der Erfindung dargestellt und im folgenden näher erläutert. Es zeigen:

Fig. 1 eine schematische Darstellung des Umrichters,

Fig.2a bis Fig.2d die prinzipiellen Spannungsverläufe von Modulationssignal $u_{Sta}$, Trägersignal $u_H$ und Wechselrichter-Ausgangsspannung $u_a$,

Fig.3 — ein Frequenzspektrum einer Statorspannung des Unterschwingungsverfahrens mit konstanter Trägerfrequenz,

Fig.4 — ein Erklärungsbild zur Veranschaulichung der Auffächerung des Frequenzspektrums einer Statorspannung nach dem erfindungsgemässen Verfahren mit PW- und PF-Modulation,

Fig.5 — ein breit aufgefächertes Frequenzspektrum nach dem erfindungsgemässen Verfahren,

Fig.6 — Bessel-Funktionen,

Fig.7 — ein Ausschnitt eines Frequenzspektrums mit eliminiertem Frequenzband, und

Fig.8a und 8b — gemäss dem zweiten Ausführungsbeispiel eine Tabelle mit den möglichen Kombinationen der Wechselrichter-Ausgangsspannungen und einen Drehzeigerstern nach dem Raumzeigermodulationsverfahren.

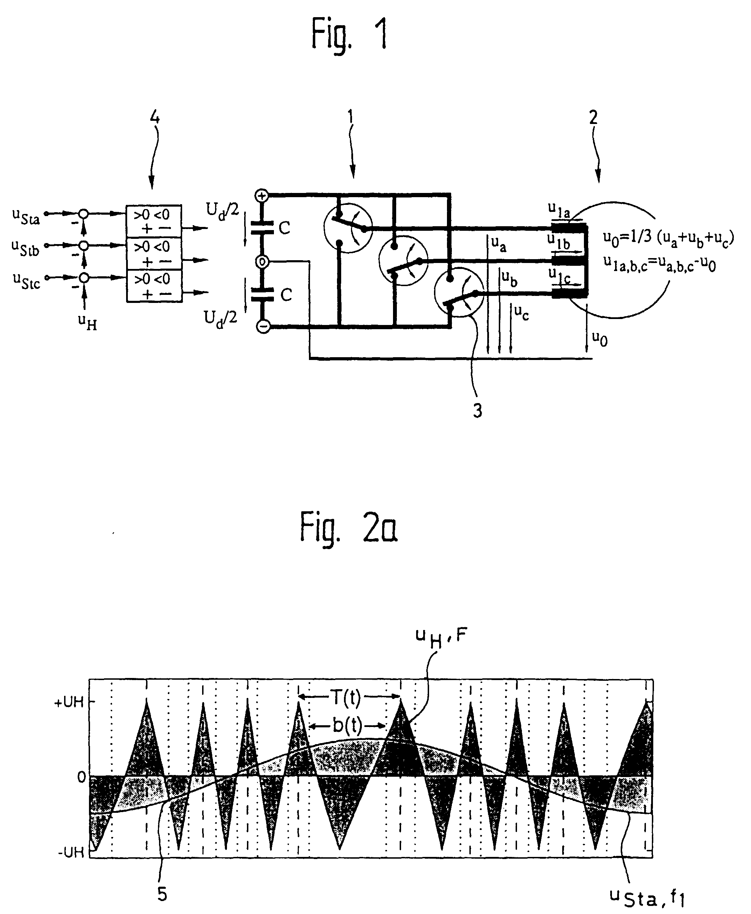

Fig.1 zeigt eine schematische Darstellung einer von einem dreiphasigen Pulswechselrichter 1 gespeisten elektrischen Maschine 2. Der Wechselrichter 1 besteht aus sechs abschaltbaren Elementen 3. Im Modulator 4 werden durch Vergleich von Modulationssignalen $u_{Sta,b,c}$ mit einem Trägersignal $u_H$ die Schaltimpulse der Schaltelemente 3 bestimmt. Die Spannungen $u_{a,b,c}$ sind die Wechselrichter-Ausgangsspannungen, $u_{1a,b,c}$ die Statorspannungen, $u_0$ die Stern-Nullpunktspannung und $U_d$ die Eingangs-Gleichspannung. Die Wechselrichter-Ausgangsspannungen $u_{a,b,c}$ entstehen dadurch, dass die halbe Eingangs-Gleichspannung $U_d/2$ entweder mit positivem oder negativem Vorzeichen auf den Ausgang durchgeschaltet wird.

Fig.2a zeigt ein Diagramm mit den Spannungsverläufen von einem Modulationssignal $u_{Sta}$ und dem Trägersignal $u_H$. Die Schnittpunkte der Signale $u_{Sta}$ und $u_H$ ergeben die Schaltzeitpunkte 5 der Schaltelemente 3. Bei jedem Schnittpunkt vom sinusförmigen Modulationssignal $u_{Sta}$ und dem Dreieck-Trägersignal $u_H$ ändert die Wechselrichter-Ausgangsspannung $u_a$ die Polarität. Der Aussteuerungsgrad $a_0$ (Modulationsindex) und die Grundschwingungsfrequenz $f_1$ der Modulationssignale $u_{Sta,b,c}$ bestimmen die Amplitude $a_0 \cdot (U_d/2)$ und die Frequenz $f_1$ der Grundschwingung $u_{GS}$ der Wechselrichter-Ausgangsspannungen $U_{a,b,c}$. Die Taktfrequenz F des Dreieck-Trägersignals $u_H$ bestimmt die Wechselrichterschaltfrequenz F:

$$F = F_0 + \Delta F \cdot \sin(2 \cdot \pi \cdot f_F \cdot t + \varphi_F)$$

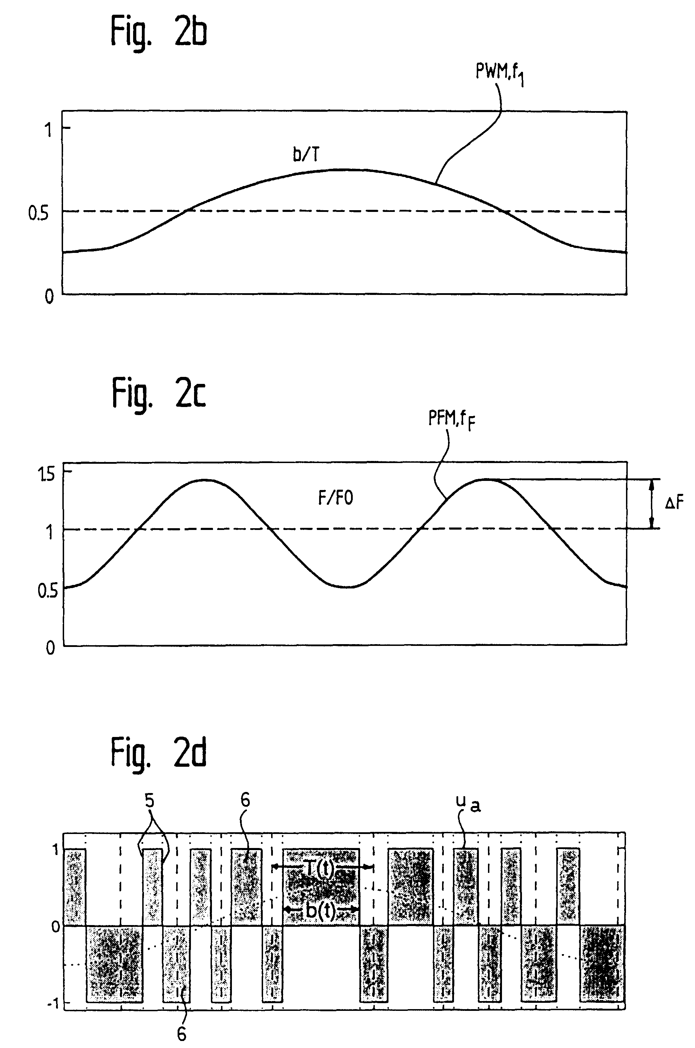

$F_0$ ist dabei die Grundtaktfrequenz, $\Delta F$ der Frequenzhub der Pulsfrequenzmodulation (PFM), $f_F$ die PFM-Frequenz und $\varphi_F$ die Phasenlage der sinusförmig variierten Taktfrequenz. Fig.2b zeigt ein Diagramm mit dem Verlauf des sinusförmigen PWM-Signals $u_{Sta}$ mit der Grundschwingungsfrequenz $f_1$.

$$u_{Sta,b,c} = U_{St} \cdot \cos(2 \cdot \pi \cdot f_1 + \delta_0 + D)$$

Fig.2c stellt den Verlauf des sinusförmigen PFM-Signals mit der Frequenz $f_F$ dar, welches das Dreieck-Trägersignal $u_H$ moduliert. Das Ziel der Modulation des Trägersignals $u_H$ besteht darin, durch stetige Veränderung der Wechselrichterschaltfrequenz F das Frequenzspektrum der Wechselrichter-Ausgangsspannungen $u_{a,b,c}$ so zu beeinflussen, dass eine gleichmässige Frequenzverteilung entsteht. Es ist auch möglich das Dreieck-Trägersignal $u_H$ mit anderen Kurvenformen zu modulieren, wie z.B. Dreieck, Sägezahn usw. Fig.2d zeigt ein Erklärungsbild mit einem möglichen Verlauf einer Wechselrichter-Ausgangsspannung $u_a$. Die Flanken der Spannungsblöcke 6 entsprechen den Schaltzeitpunkten 5.

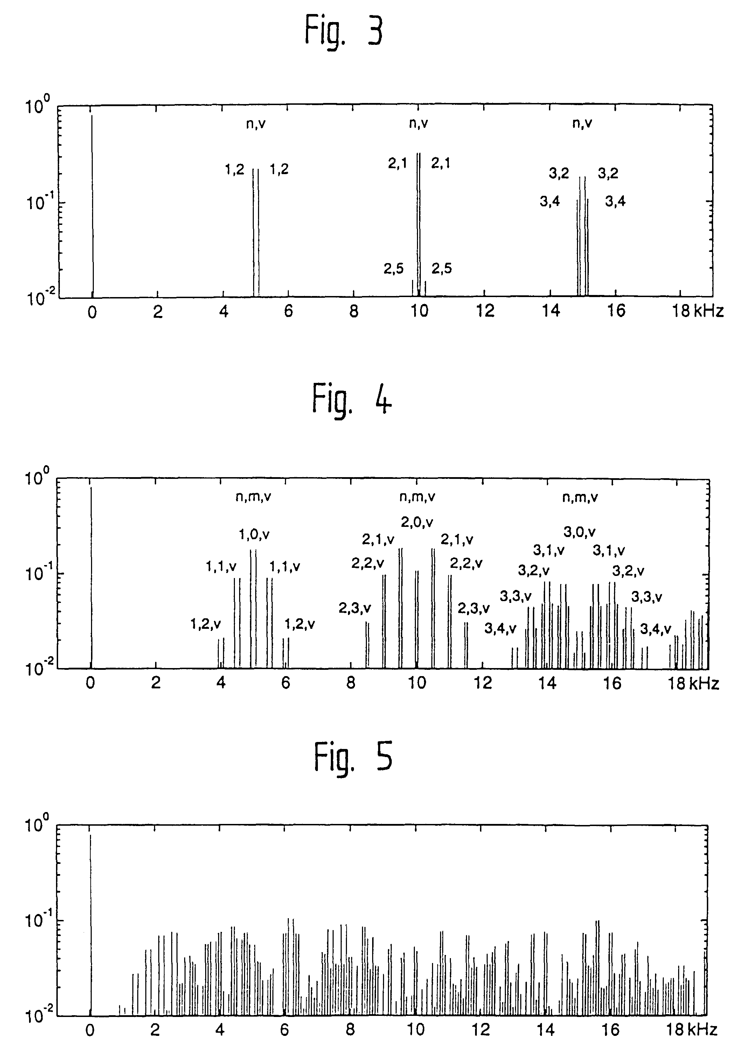

Fig.3 zeigt ein Frequenzspektrum einer mit dem Unterschwingungsverfahren erzeugten Statorspannung. Die generierte Spannung $u_a$ weist aufgrund der konstanten Taktfrequenz F des Trägersignals $u_H$ nur bei einzelnen Frequenzen um die Vielfachen der Taktfrequenz F hohe Amplituden auf. Diese Oberschwingungen erzeugen ein scharfes, unangenehmes Geräusch.

Fig.4 zeigt ein Erklärungsbild eines Frequenzspektrums einer Statorspannung mit zusätzlicher sinusförmiger Pulsfrequenzmodulation (PFM) des Trägersignals $u_H$. Die stetige Veränderung der Frequenz F des Dreieck-Trägersignals $u_H$ ergibt eine gleichmässige Verteilung der Oberschwingungen über den gesamten Frequenzbereich. Dabei werden die Hauptgruppen der Oberschwingungen des Unterschwingungsverfahren mit konstanter Trägerfrequenz mit den Parametern n und v in Untergruppen des erfindungsgemässen Verfahrens mit den Parametern n, m und v aufgefächert, wobei n die Ordnungszahl der Grundtaktfrequenz $F_0$, v die Ordnungszahl der PWM-Frequenz $f_1$ und m die

Ordnungszahl der PFM-Frequenz $f_F$ bedeuten. Durch gezieltes Setzen der Parameter $\Delta F$ und $f_F$ der in nachstehend erläuterten Formel (Formel 1) zur Berechnung der Wechselrichter-Ausgangsspannungen $u_{a,b,c}$ kann das Spektrum breit aufgefächert werden.

Fig.5 zeigt ein breit aufgefächertes Frequenzspektrum einer Statorspannung nach dem erfindungsgemässen Verfahren. Mit der folgenden Formel lassen sich die Wechselrichter-Ausgangsspannungen $u_{a,b,c}$ und die Oberschwingungskomponenten $U_{nmv}$ berechnen:

**(Formel 1)**

$$u_{a,b,c} = U_d/2 \cdot a_0 \cos(2\pi f_1 t + \delta_0 + D) +$$

$$+ \sum_{n=1}^{\infty} \sum_{m=0}^{\infty} \sum_{v=0}^{\infty} U_{nmv} \bullet \begin{bmatrix} + \cos[2\pi(nF_0 + mf_F + vf_1)t + (n\gamma_0 - m\,\pi/2 + m\varphi_F + v\delta_0) + vD] + \\ + \cos[2\pi(nF_0 + mf_F - vf_1)t + (n\gamma_0 - m\,\pi/2 + m\varphi_F - v\delta_0) - vD] + \\ + \cos[2\pi(nF_0 - mf_F + vf_1)t + (n\gamma_0 - m\,\pi/2 - m\varphi_F + v\delta_0) + vD] + \\ + \cos[2\pi(nF_0 - mf_F - vf_1)t + (n\gamma_0 - m\,\pi/2 - m\varphi_F - v\delta_0) - vD] \end{bmatrix}$$

wobei die Oberschwingungskomponenten sind:

$$U_{nmv} = \underbrace{\frac{\sin[(n+v)\,\pi/2]}{\begin{array}{l} +1 \ \ f\ddot{u}r \ \ n+v=1,5,9,.. \\ -1 \ \ f\ddot{u}r \ \ n+v=3,7,11,.. \\ \ \ 0 \ \ f\ddot{u}r \ \ n+v=0,2,4,6,.. \end{array}}} \cdot 1/\pi \cdot U_d/2 \cdot 1/n \cdot \underbrace{\left[2 - \binom{0}{m}\right]}_{\begin{array}{l} 2 \ f\ddot{u}r \ m>0 \\ 1 \ f\ddot{u}r \ m=0 \end{array}} \cdot \underbrace{\left[2 - \binom{0}{v}\right]}_{\begin{array}{l} 2 \ f\ddot{u}r \ v>0 \\ 1 \ f\ddot{u}r \ v=0 \end{array}} \cdot J_m(n\,\Delta F/f_F) \cdot J_v(n\,\pi/2 \cdot a_0)$$

Desweitern bedeuten:

$U_d$:             Eingangs-Gleichspannung
$a_0$ :            Aussteuerungsgrad (0..1)
$f_1$ :            Grundschwingungsfrequenz, PWM-Frequenz
$U_{nmv}$ :       Spannungsamplitude der Oberschwingung
$n$ :            Ordnungszahl der Grundtaktfrequenz $F_0$
$v$ :            Ordnungszahl der PWM-Frequenz $f_1$
$m$ :           Ordnungszahl der PFM-Frequenz $f_F$
$f_F$ :           PFM-Frequenz
$\Delta F$ :         Frequenzhub der Pulsfrequenzmodulation
$F$ :            Taktfrequenz
$F_0$ :          Grundtaktfrequenz
$J_m, J_v$ :      Besselfunktionen
$D$ :           Phasenverschiebung 0°(a), -120°(b), +120°(c)
$\delta_0$ :          Phasenlage der Modulationsspannung $u_{St}$ und der Grundschwingung der Wechselrichter-Ausgangsspannung $u_{a,b,c}$
$\gamma_0$ :          Phasenlage des Trägersignals $u_H$
$\varphi_0$ :          Phasenlage der PFM-Funktion F
$\overset{\circ}{(m)},\overset{\circ}{(v)}$ :     Binominalkoeffizienten

Durch die Unabhängigkeit der Grundschwingung

$$u_{GS} = (U_d/2) \cdot a_0 \cdot \cos(2 \cdot \pi \cdot f_1 \cdot t + \delta_0 + D)$$

gegenüber der PFM-Frequenz $f_F$ und dem Frequenzhub $\Delta F$ für die Pulsfrequenzmodulation lässt sich das Frequenzspektrum beliebig verändern, ohne die Grundschwingung $u_{GS}$ zu beeinflussen.

Die Bessel-Funktionen

$$J_m(n \cdot \Delta F/f_F)$$

$$J_v(n \cdot \pi/2 \cdot a_0)$$

beziehungsweise das Verhältnis

$$\Delta F/f_F$$

bestimmen die Amplituden $U_{nmv}$ der Oberschwingungskomponenten. Je grösser dieses Verhältnis ist, desto grösser ist die Anzahl der Untergruppen mit der Ordnungszahl m und folglich bedeutet das eine breitere Verteilung des Frequenzspektrums. Aus dieser Erkenntnis ergibt sich der grosse Vorteil, dass das Frequenzspektrum beliebig geformt werden kann. Um eine möglichst gleichmässige Frequenzverteilung zu erhalten, können die Modulationsparameter $f_F$ und $\Delta F$ so gesetzt werden, dass die Frequenzen der Oberschwingungen $U_{nmv}$ benachbarter Hauptgruppen n, die sich im Frequenzspektrum überlappen, nicht zusammenfallen. Mit der Bessel-Funktion zur Berechnung der Oberschwingungen $U_{nmv}$ lässt sich nicht nur das Frequenzspektrum breit auffächern, sondern es können auch Oberschwingungen der Untergruppen m, welche mechanische Statorresonanzen anregen würden, eliminiert werden.

Die PFM-Frequenz $f_F$ bestimmt direkt den Abstand

$$\pm m \cdot f_F \pm v \cdot f_1$$

der Seitenbandfrequenzen zu den Oberschwingungen $n \cdot F_0$ der Grundtaktfrequenz $F_0$.

Im Multiplikator

$$[+\cos[2 \cdot \pi(n \cdot F_0 + m \cdot f_F + v \cdot f_1)t + ...]]$$

steht im übrigen die Phasenlage der Oberschwingung $U_{nmv}$.

Das durch Statorvibrationen aufgrund der radialen Magnetkräfte erzeugte Geräusch hat die gleiche Frequenzverteilung wie die radiale Luftspaltkräfteverteilung p. Aufgrund bekannter Berechnungen steht fest, dass bei konstanter Grundschwingungsamplitude der magnetischen Luftspaltinduktion (durch übliche Regelungsart der Asynchronmaschine gewährleistet) die Oberschwingungsamplituden $P_{nmv}$ der radialen Luftspaltkräfteverteilung p direkt proportional zu den Oberschwingungsamplituden $U_{nmv}$ gemäss obenstehender Formel sind.

$$P_{nmv} \sim U_{nmv}$$

Dies bedeutet grundsätzlich, dass durch eine Reduktion der Oberschwingungsamplituden eine Geräuschreduktion entsteht. Durch die Auffächerung des Frequenzspektrums werden die Oberschwingungsamplituden der Wechselrichter-Ausgangsspannungen einerseits reduziert, andererseits entsteht ein Klangbild, welches keine auffälligen Einzelfrequenzen mehr aufweist, sondern als gleichmässiges Rauschen wahrgenommen wird. Dabei ist nicht nur eine wertmässige Reduktion des Geräuschpegels festzustellen, es entsteht durch das Auftreten vieler, über das gesamte Spektrum verteilter Frequenzen auch ein angenehmeres Geräusch.

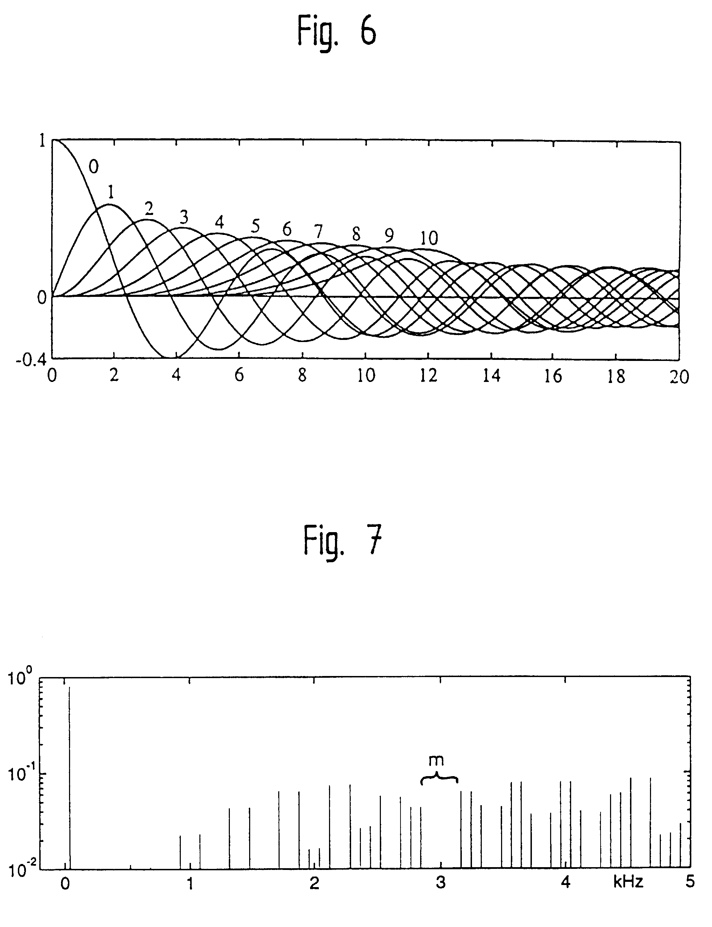

Fig.6 zeigt den Verlauf der zur Optimierung des Modulationsverfahrens und zur Eliminierung von Frequenzbändern verwendeten Bessel-Funktionen.

Fig.7 zeigt einen Ausschnitt eines Frequenzspektrums nach dem erfindungsgemässen Verfahrens mit einem eliminierten Frequenzband. Die Eliminierung basiert auf der Verwendung von Bessel-Funktionen. Die zu eliminierenden Frequenzen können durch das Verhältnis

$$\Delta F/f_F$$

bestimmt werden. Die Amplituden der Oberschwingungen $U_{nmv}$ mit den Frequenzen

$$n \cdot F_0 \pm m \cdot f_F \pm v \cdot f_1$$

sind proportional zur Bessel-Funktion

$$J_m(n \cdot \Delta F / f_F)$$

Durch entsprechendes Setzen der Parameter $\Delta F$ und $f_F$ kann die Bessel-Funktion für bestimmte Trägervielfache n und Untergruppen m zu Null werden. Im folgenden wird das Vorgehen genauer erläutert. Die Grundtaktfrequenz $F_0$ des Dreieck-Trägersignals $u_H$ wird festgelegt. Durch die Wahl der PFM-Frequenz $f_F$ ist die Lage der Untergruppen m bekannt. Anhand der ermittelten mechanischen Statorresonanzfrequenz kann der störende Frequenzbereich ausgewählt werden. Durch die Ordnungszahl m der Untergruppe kann die Ordnungszahl der Bessel-Funktion bestimmt werden. Um das Frequenzband bzw. die Untergruppe m zu eliminieren, ist die Bessel-Funktion nach Fig.6 der vorher bestimmten Ordnungszahl Null zu setzen. Das Argument an der Nullstelle ist gleich dem Verhältnis

$$(n \cdot \Delta F) / f_F$$

Die PFM-Frequenz $f_F$ wurde vorgängig festgelegt. Somit kann der Frequenzhub $\Delta F$ der Pulsfrequenzmodulation bestimmt werden, sodass die gewünschte Untergruppe m im Frequenzspektrum nicht erzeugt wird. Die Eliminierung der ausgewählten Untergruppe m ist unabhängig vom Aussteuerungsgrad $a_0$ und der Grundschwingungsfrequenz $f_1$ und ist deshalb auch unabhängig vom Betriebspunkt der Maschine.

Das zweite Ausführungsbeispiel bezieht sich auf ein Verfahrens mittels Raumzeigermodulation anstelle der Trägermodulation.

Die Herleitung des Frequenzspektrums der Wechselrichter-Ausgangsspannungen $u_{a,b,c}$ des PWM-Verfahrens mit variabler Taktfrequenz wurde basierend auf der Trägermodulation durchgeführt, da diese im Gegensatz zur Raumzeigermodulation die Zeitabhängigkeit der PWM und PFM besser darstellt. Natürlich kann die praktische Implementierung auf beide Arten (Träger- oder Raumzeigermodulation) mit dem gleichen Resultat erfolgen.

Zur Erläuterung der Raumzeigermodulation werden die Steuerspannungen $u_{Sta,b,c}$ sowie die Wechselrichter-Ausgangsspannungen $u_{a,b,c}$ mit der folgenden Vorschrift in den Drehzeigerbereich transformiert:

$$\bar{x} = 2/3 \cdot \left[ x_a + x_b e^{+j120°} + x_c e^{-j120°} \right]$$

Für die Steuerspannungen $u_{Sta,b,c} = U_d / 2 \cdot a_0 \cdot \cos(2\pi f_1 t + \delta_0 + D)$ resultiert nach der obigen Vorschrift der Drehzeiger:

$$\vec{u}_{St} = U_d / 2 \cdot a_0 \cdot e^{j(2\pi f_1 t + \delta_0)} = U_d / 2 \cdot a_0 \cdot e^{j\delta(t)} \text{ mit } \delta(t) = 2\pi f_1 t + \delta_0$$

Da die Wechselrichter-Ausgangsspannungen $u_{a,b,c}$ wegen der Schaltelemente (3) (siehe Fig.1) nur die Werte $\pm U_d / 2$ annehmen können, gelingt die Nachbildung des gewünschten kontinuierlich umlaufenden Drehzeigers nur auf unvollkommene Weise. Die Tabelle in Fig.8a zeigt, dass es nur acht mögliche Dreier-Kombinationen der momentanen Wechselrichter-Ausgangsspannungen gibt, aus welchen nur sechs mögliche diskrete Drehzeigerpositionen ($\vec{u}_1$, $\vec{u}_2$, $\vec{u}_3$, $\vec{u}_4$, $\vec{u}_5$, $\vec{u}_6$) sowie zwei Nullpositionen ($\vec{u}_0$, $\vec{u}_7$) hervorgehen können.

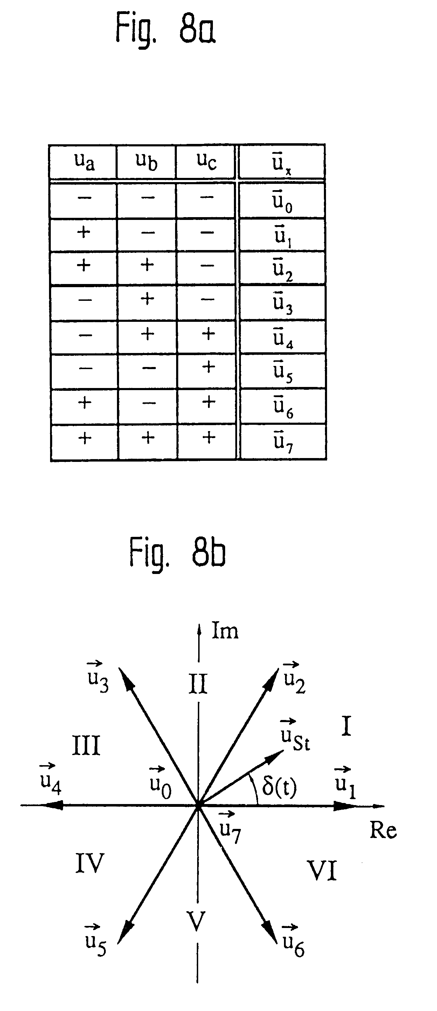

Der in Fig.8b abgebildete "Drehzeigerstern" wird in die beschrifteten Sektoren I bis VI unterteilt. Beim Unterschwingungsverfahren mit konstanter Taktfrequenz $F = F_0$ werden pro Taktperiode $T = 1/F_0$ die diskreten Drehzeiger sechs mal nach einer bestimmten Sequenz gewechselt. Innerhalb eines Sektors bleibt diese diskrete Drehzeigersequenz immer die selbe und wird nach Ablauf der Taktperiode T wiederholt.

Die Zeitdauer $t_x$ ($t_x = t_1, t_2, .., t_6$), während dem ein diskreter Drehzeiger $\vec{u}_x$ in einer Sequenz Gültigkeit hat, hängt vom Aussteuerungsgrad $a_0$ und dem Winkel $\delta(t)$ ab.

Die Nummer (I,II,..,VI) des Sektors wird durch den Aufenthaltsort des Drehzeigers bestimmt. Die diskreten Drehzeigersequenzen sind für die Sektoren I bis VI wie folgt definiert:

Sektor I : $\quad\vec{u}_1\ \vec{u}_0\ \vec{u}_1\ \vec{u}_2\ \vec{u}_7\ \vec{u}_2$

Sektor II : $\quad\vec{u}_3\ \vec{u}_0\ \vec{u}_3\ \vec{u}_2\ \vec{u}_7\ \vec{u}_2$

Sektor III : $\quad\vec{u}_3\ \vec{u}_0\ \vec{u}_3\ \vec{u}_4\ \vec{u}_7\ \vec{u}_4$

Sektor IV : $\quad\vec{u}_5\ \vec{u}_0\ \vec{u}_5\ \vec{u}_4\ \vec{u}_7\ \vec{u}_4$

Sektor V : $\quad\vec{u}_5\ \vec{u}_0\ \vec{u}_5\ \vec{u}_6\ \vec{u}_7\ \vec{u}_6$

Sektor VI : $\quad\vec{u}_1\ \vec{u}_0\ \vec{u}_1\ \vec{u}_6\ \vec{u}_7\ \vec{u}_6$

Folge der Zeitspannen : $\quad t_1\ t_2\ t_3 t_4\ t_5\ t_6$

wobei:

$$t_1+t_2+t_3+t_4+t_5+t_6 = T = 1/F_0$$

Die diskreten Drehzeigersequenzen bleiben für das erfindungsgemässe Verfahren mit variabler Taktfrequenz F die gleichen. Neu wird dabei nur die Taktperiode T=1/F einer Drehzeigersequenz variiert. Die einzelnen Zeitabschnitte $t_1$, $t_2,..,t_6$ innerhalb einer Sequenz werden somit zusätzlich von der Funktion $F=F_0+\Delta F\cdot\sin(2\cdot\pi\cdot f_F\cdot t+\varphi_F)$ abhängig.

## Patentansprüche

1. Verfahren zum geräuscharmen Betrieb einer Maschine (2), die von einem Pulswechselrichter (1) gespeist wird, bei dem die Schaltimpulse zur Steuerung der Schaltelemente (3) des Wechselrichters (1), mittels derer das Pulsmuster der Wechselrichter-Ausgangsspannung ($u_{a,b,c}$) erzeugt wird, durch Trägermodulation generiert werden, wobei die Frequenz (F) eines Trägersignals (uH) der Trägermodulation zur Pulsmustererzeugung mittels Pulsfrequenzmodulation (PFM) in Abhängigkeit von einer definierten Funktion zur Verringerung oder Eliminierung von störend hörbaren Oberschwingungen der Wechselrichter-Ausgangsspannung ($u_{a,b,c}$) moduliert wird, dadurch gekennzeichnet, dass die zu eliminierenden Oberschwingungsanteile ($U_{nmv}$) der Wechselrichter-Ausgangsspannung ($u_{a,b,c}$) in Abhängigkeit der Parameter Frequenzhub ($\Delta F$) und Frequenz ($f_F$) der Pulsfrequenzmodulation (PFM) mathematisch bestimmt werden.

2. Verfahren nach Anspruch 1, dadurch gekennzeichnet, dass die Oberschwingungsanteile ($U_{nmv}$) der Wechselrichter-Ausgangsspannung ($u_{a,b,c}$) von einer Bessel-Funktion mit dem Verhältnis ($n\Delta F/f_F$) der Modulationsparameter als Argument abhängen.

3. Verfahren nach Anspruch 2, dadurch gekennzeichnet, dass durch eine Vergrösserung des Verhältnisses ($n\Delta F/f_F$) die Auffächerung des Frequenzspektrums in Untergruppen (m) vergrössert und die Amplituden der Oberschwingungen ($U_{nmv}$) verkleinert werden.

4. Verfahren nach Anspruch 2 oder 3, dadurch gekennzeichnet, dass Untergruppen (m) im Frequenzspektrum eliminiert werden können, indem das Verhältnis ($n\Delta F/f_F$) der Modulationsparameter so festgelegt wird, dass die zur Untergruppe (m) gehörende Bessel-Funktion $J_m(n\Delta F/f_F)$ Null wird.

## Claims

1. Method for the low-noise operation of a machine (2), which is fed by a pulse inverter (1), in which the switching pulses for control of the switching elements (3) of the inverter (1), by means of which the pulse pattern of the inverter output voltage ($u_{a,b,c}$) is produced, are generated by carrier modulation, wherein the frequency (F) of a carrier signal (uH) of the carrier modulation for the pulse pattern generation is modulated by means of pulse frequency modulation (PFM) in dependence on a defined function for reduction or elimination of disturbing harmonics of the inverter output voltage ($u_{a,b,c}$), characterised in that the harmonic components ($U_{nmv}$), which are to be eliminated, of the inverter output voltage ($u_{a,b,c}$) are determined in dependence on the parameters of the frequency deviation ($\Delta F$) and the frequency ($f_F$) of the pulse frequency modulation (PFM).

7

2. Method according to claim 1, characterised thereby, that the harmonic components ($U_{nmv}$) of the inverter output voltage ($u_{a,b,c}$) depend on a Bessel function with the ratio ($n\Delta F/f_F$) of the modulation parameters as argument.

3. Method according to claim 2, characterised thereby, that the fanning-out of the frequency spectrum into subgroups (m) is increased and the amplitudes of the harmonics ($U_{nmv}$) are reduced by an increase in the ratio ($n\Delta F/f_F$).

4. Method according to claim 2 or 3, characterised thereby, that subgroups (m) in the frequency spectrum can be eliminated in that one so fixes the ratio ($n\Delta F/f_F$) of the modulation parameters that the Bessel function $J_m(n\Delta F/f_F)$ belonging to the subgroup (m) becomes zero.


**Revendications**

1. Procédé pour le fonctionnement peu bruyant d'une machine (2) alimentée par un onduleur à impulsions (1), selon lequel les impulsions de commutation pour la commande des éléments de circuit (3) de l'onduleur (1) grâce auxquelles le modèle d'impulsions de la tension de sortie de l'onduleur ($u_{a,b,c}$) est formé sont générées par modulation porteuse, la fréquence (F) d'un signal porteur (uH) de la modulation porteuse pour générer le modèle d'impulsions étant modulée à l'aide d'une modulation de fréquence par impulsions (PFM) suivant une fonction définie, pour réduire ou supprimer les harmoniques audibles et gênants de la tension de sortie d'onduleur ($u_{a,b,c}$), caractérisé en ce que les parts d'harmoniques ($U_{nmv}$) de la tension de sortie d'onduleur ($u_{a,b,c}$) qui doivent être supprimées sont définies mathématiquement en fonction des paramètres constitués par la déviation de fréquence ($\Delta F$) et la fréquence ($f_F$) de la modulation de fréquence par impulsions (PFM).

2. Procédé selon la revendication 1, caractérisé en ce que les parts d'harmoniques ($U_{nmv}$) de la tension de sortie d'onduleur ($u_{a,b,c}$) dépendent d'une fonction de Bessel avec comme argument le rapport ($n\Delta F/f_F$) des paramètres de modulation.

3. Procédé selon la revendication 2, caractérisé en ce que grâce à une augmentation du rapport ($n\Delta F/f_F$), l'étendue du spectre de fréquences dans des sous-groupes (m) augmente et les amplitudes des harmoniques ($U_{nmv}$) diminuent.

4. Procédé selon la revendication 2 ou 3, caractérisé en ce qu'on peut supprimer des sous-groupes (m) dans le spectre de fréquences en fixant le rapport ($n\Delta F/f_F$) des paramètres de modulation de telle sorte que la fonction de Bessel $Jm(n\Delta F/f_F)$ qui appartient au sous-groupe (m) devienne nulle.

# Fig. 1

$$u_0 = 1/3\,(u_a + u_b + u_c)$$
$$u_{1a,b,c} = u_{a,b,c} - u_0$$

# Fig. 2a

## Fig. 2b

## Fig. 2c

## Fig. 2d

# Fig. 3

# Fig. 4

# Fig. 5

# Fig. 6

# Fig. 7

# Fig. 8a

| $u_a$ | $u_b$ | $u_c$ | $\vec{u}_x$ |
|:---:|:---:|:---:|:---:|
| − | − | − | $\vec{u}_0$ |
| + | − | − | $\vec{u}_1$ |
| + | + | − | $\vec{u}_2$ |
| − | + | − | $\vec{u}_3$ |
| − | + | + | $\vec{u}_4$ |
| − | − | + | $\vec{u}_5$ |
| + | − | + | $\vec{u}_6$ |
| + | + | + | $\vec{u}_7$ |

# Fig. 8b